# EUROPÄISCHE PATENTSCHRIFT

(11) **EP 2 853 820 B1**
(45) Veröffentlichungstag und Bekanntmachung des Hinweises auf die Patenterteilung: **29.11.2017**
(21) Anmeldenummer: 14174915.0
(22) Anmeldetag: 30.06.2014
(51) Int. Cl.: F24C 15/16, A47J 37/06

(54) **Vorrichtung zum Garen von Lebensmitteln**
Food cooking device
Dispositif de cuisson de produits alimentaires

(30) Priorität: 04.09.2013 DE 102013014719
(43) Veröffentlichungstag der Anmeldung: 01.04.2015
(73) Patentinhaber: Gronbach Forschungs- und Entwicklungs GmbH & Co. KG, 6342 Niederndorf (AT)
(72) Erfinder: Bocks, Stefan, 83112 Frasdorf (DE); Kofler, Robert, 6334 Schwoich (AT); Weweck, Alexander, 83134 Prutting (DE); Thaller, Stephan, 83564 Soyen (DE); Kopfensteiner, Peter, 6341 Ebbs (AT)
(74) Vertreter: Zinnecker, Armin

(56) Entgegenhaltungen:
- EP-A1- 1 818 620
- DE-A1- 10 001 330
- DE-A1-102012 003 970
- DE-B3-102010 036 993
- US-A1- 2008 099 471

## Beschreibung

Die Erfindung betrifft eine Vorrichtung zum Garen von Lebensmitteln, die eine obere und eine untere Heizplatte umfasst. Die Erfindung betrifft ferner ein Küchenmöbel mit einer Aufnahme und einer darin angeordneten derartigen Vorrichtung zum Garen von Lebensmitteln.

Aus der DE 10 2011 101 042 A1 ist ein Küchenmöbel mit einer Schublade bekannt, in der sich eine Vorrichtung der eingangs angegebenen Art befindet.

Aus der DE 10 2012 003 970 A1 ist eine Vorrichtung zum Garen von Lebensmitteln nach dem Oberbegriff des Anspruchs 1 bekannt.

Die US 2008/099471 A1 offenbart eine weitere Vorrichtung zum Garen von Lebensmitteln.

Aus der DE 100 01 330 A1 ist eine Elektrokochplatte mit einem Kochplattenkörper aus Glaskeramik und einer an dessen Unterseite angeordneten Beheizung bekannt, die ein elektrisches Heizwiderstandsmaterial aufweist.

Die EP 1 818 620 A1 offenbart einen Ofen mit einer Heizplatte, in der eine Induktionsheizung angeordnet ist.

Aufgabe der Erfindung ist es, eine verbesserte Vorrichtung der eingangs angegebenen Art vorzuschlagen. Insbesondere sollen das Heizverhalten und die Möglichkeit der Reinigung der Vorrichtung im Küchenmöbel verbessert werden.

Vor diesem Hintergrund betrifft die Erfindung eine Vorrichtung zum Garen von Lebensmitteln. Die Vorrichtung umfasst ein Gehäuse sowie eine obere und eine untere Heizplatte. Wenigstens eine und vorzugsweise die obere Heizplatte ist derart in dem Gehäuse befestigt, dass sie von einer ersten Stellung in eine zweite Stellung bewegt werden kann. In der ersten Stellung sind die beiden Heizplatten parallel zueinander angeordnet. In der zweiten Stellung ist der Vertikalabstand der Heizplatten zumindest abschnittsweise größer ist als in der ersten Stellung. Hinter der oberen und/oder der unteren Heizplatte ist eine Heizung und vorzugsweise eine Induktionsheizung angeordnet, die gemeinsam mit der dazugehörigen Heizplatte eine obere bzw. untere Heizeinheit oder einen Teil davon bildet.

Dies bedeutet, dass eine und vorzugsweise die obere Heizplatte so in der Aufnahme befestigt ist, dass sie von der anderen Heizplatte wegbewegt werden kann. Beim Übertritt der Heizplatte von der ersten in die zweite Stellung vergrößert sich der Abstand der Auflageflächen bzw. Garflächen der Heizplatten zumindest abschnittsweise und vorzugsweise überall. In der zweiten Stellung können die Flächen der Heizplatten in einem Winkel zueinander stehen. Unter einem Garen wird ein Braten, Toasten und/oder Grillen der Lebensmittel verstanden, die sich in der Vorrichtung befinden. Die Lebensmittel werden zwischen der oberen und der unteren Heizplatte eingefasst. Bevorzugt ist dabei, dass die obere Heizplatte Lebensmittel unterschiedlicher Dicke berührt. Dies kann durch eine vertikal flexible, beispielsweise vertikal geführte und/oder gefederte Lagerung einer und vorzugsweise der oberen Heizplatte erreicht werden.

Die Heizplatten werden durch diese Heizung beheizt. Hinter der jeweiligen Heizplatte bedeutet oberhalb der oberen Heizplatte und unterhalb der unteren Heizplatte hinter deren der Auflagefläche gegenüberstehenden Rückfläche. Die Heizeinheit ist ggf. als Ganzes so in der Aufnahme befestigt ist, dass sie von einer ersten Stellung in eine zweite Stellung bewegt werden kann. Dies gilt insbesondere für die obere Heizeinheit. Die Heizeinheit umfasst in der Regel noch weitere Bauteile wie zumindest einen Träger zur Aufnahme der Heizplatte und der Heizung. Der Träger kann beispielsweise aus Metall oder einem hitzebeständigen Kunststoff gefertigt sein. Bei der Induktionsheizung handelt es sich vorzugsweise um eine stromdurchflossene Spule. Heizplatten auf Induktionsbasis sind unter anderem aufgrund Ihres schnellen Ansprechverhaltens und der guten Energieausbeute vorteilhaft.

Erfindungsgemäß ist die obere und/oder die untere Heizplatte lösbar an der jeweiligen Heizeinheit befestigt. Die Heizplatte kann also reversibel von der jeweiligen Heizeinheit bzw. dem Träger abgenommen werden, beispielweise um die Heizplatte in der Spülmaschine zu reinigen. Geeignete Befestigungsarten für die lösbare Befestigung umfassen unter anderem einen Rastmechanismus, beispielweise unter Verwendung von Metallfedern, oder eine Magnetverbindung. Die untere Heizplatte kann beispielsweise auch einfach in eine Aufnahme der unteren Heizeinheit eingelegt sein.

Gemäß der Erfindung ist zwischen der oberen und/oder unteren Heizplatte und der jeweiligen Heizung eine Zwischenplatte angeordnet.

Erfindungsgemäß überdeckt die Zwischenplatte die Heizung vollständig und dicht. Ein vollständiges und dichtes Überdecken kann bedeuten, dass die Zwischenplatte auf allen Seiten formschlüssig mit dem Träger der Heizeinheit abschließt. Die Zwischenplatte kann mit dem Träger gegebenenfalls umlaufend verklebt sein. Dies verhindert eine Verschmutzung der Heizung und ermöglicht zudem eine einfache Reinigung der Heizeinheit mit abgenommener Heizplatte.

Gemäß der Erfindung besteht die Zwischenplatte aus einem hitzebeständigen und elektrisch isolierenden Material. Bevorzugt ist dabei der Einsatz einer Glaskeramik. Platten aus Glaskeramik haben eine hohe Durchlässigkeit für Wärmestrahlung oder das elektrische Feld einer Induktionsheizung, und haben eine geringe Wärmeausdehnung. Sie besitzen eine glatte und porenfreie Oberfläche. Die Wärmeleitfähigkeit ist gering, was dazu führt, dass der umgebende Bereich nicht zu stark erhitzt wird. Hauptbestandteile einer bevorzugten Glaskeramik sind Lithium-, Aluminium- und Siliziumoxid.

Vorteilhafte Weiterbildungen der Erfindung sind in den Unteransprüchen beschrieben.

In einer vorteilhaften Ausführungsform weist die obere und/oder die untere Heizplatte ein Metall und vorzugsweise ein ferromagnetisches Material wie beispielsweise eine Eisenlegierung auf oder besteht daraus. Dies ermöglicht bzw. begünstigt die induktive Beheizung der Heizplatten. Insbesondere Eisenlegierungen haben in der Regel geeignete elektrische Widerstände für eine induktive Beheizung.

Unter einem Gehäuse wird grundsätzlich jeder Rahmen verstanden, der geeignet ist, die Heizeinheiten etc. der erfindungsgemäßen Vorrichtung zu tragen und gegeneinander zu fixeren.

In einer Ausführungsform handelt es sich bei dem Gehäuse um eine Aufnahme eines Küchenmöbels. In einer Ausführungsform umfasst die Aufnahme eine Schublade. Die erfindungsgemäße Vorrichtung kann zumindest teilweise an der Schublade angeordnet sein bzw. Bestandteil der Schublade bilden. Eine teilweise Anordnung an der Schublade kann bedeuten, dass eine Heizeinheit, beispielsweise die obere Heizeinheit in der Aufnahme befestigt ist und nicht an der Schublade angeordnet ist, während die andere Heizeinheit, beispielsweise die untere Heizeinheit an der Schublade angeordnet ist. Beispielsweise kann vorgesehen sein, dass der Träger der unteren Heizeinheit an der Schublade befestigt ist oder Teil des Schubladenbodens bildet.

Alternativ kann die Aufnahme auch eine erfindungsgemäße Vorrichtung mit einem separat von der Aufnahme ausgebildeten Gehäuse aufnehmen.

In einer Ausführungsform ist wenigstens eine und vorzugsweise die obere Heizeinheit so ausgebildet oder in der Aufnahme des Küchenmöbels befestigt, dass die dazugehörige Heizplatte sich beim Öffnen der Schublade von der ersten Stellung in die zweite Stellung bewegt. Dies umfasst Ausführungsformen, wobei die obere Heizeinheit so in der Aufnahme befestigt ist, dass die Bewegung von der ersten Stellung in die zweite Stellung synchron mit dem Öffnen der Schublade erfolgt. Aber gleichermaßen können auch asynchrone Bewegungen vorgesehen sein, beispielsweise dass die Bewegung von der ersten Stellung in die zweite Stellung ab einem gewissen Öffnungsgrad der Schublade plötzlich erfolgt.

In einer Ausführungsform ist wenigstens eine und vorzugsweise die untere Heizeinheit in der Schublade des Küchenmöbels befestigt.

Die obere und die untere Heizplatte können gleich groß sind und/oder gleich geformt sein. Die obere und/oder die untere Heizplatte können an der Kontaktfläche bzw. Auflagefläche für das Lebensmittel eine Struktur und vorzugsweise Rillen aufweisen.

Die Erfindung betrifft ferner ein Küchenmöbel mit einer Aufnahme und einer darin angeordneten erfindungsgemäßen Vorrichtung (3) zum Garen von Lebensmitteln, wobei die Aufnahme des Küchenmöbels mit dem Gehäuse (1) der Vorrichtung verbunden ist oder das Gehäuse (1) darstellt. Bei dem Küchenmöbel kann es sich beispielsweise um einen Einbauschrank bzw. eine Einbaukommode für eine Küche handeln.

Weitere Einzelheiten und Vorteile ergeben sich aus dem nachfolgend anhand der Figuren beschriebenen Ausführungsbeispiel. In den Figuren zeigen:
- Figur 1:: eine Aufnahme eines erfindungsgemäßen Küchenmöbels mit darin angeordneter Schublade und erfindungsgemäßer Vorrichtung zum Garen von Lebensmitteln in perspektivischer Ansicht;
- Figur 2:: die Aufnahme aus Figur 1 im Querschnitt;
- Figur 3:: eine perspektivische Ansicht der Aufnahme aus Figur 1 mit geöffneter Schublade;
- Figur 4:: die Aufnahme aus Figur 3 im Querschnitt; und
- Figur 5:: eine vergrößerte Querschnittsansicht einer in der Vorrichtung angeordneten Heizeinheit.

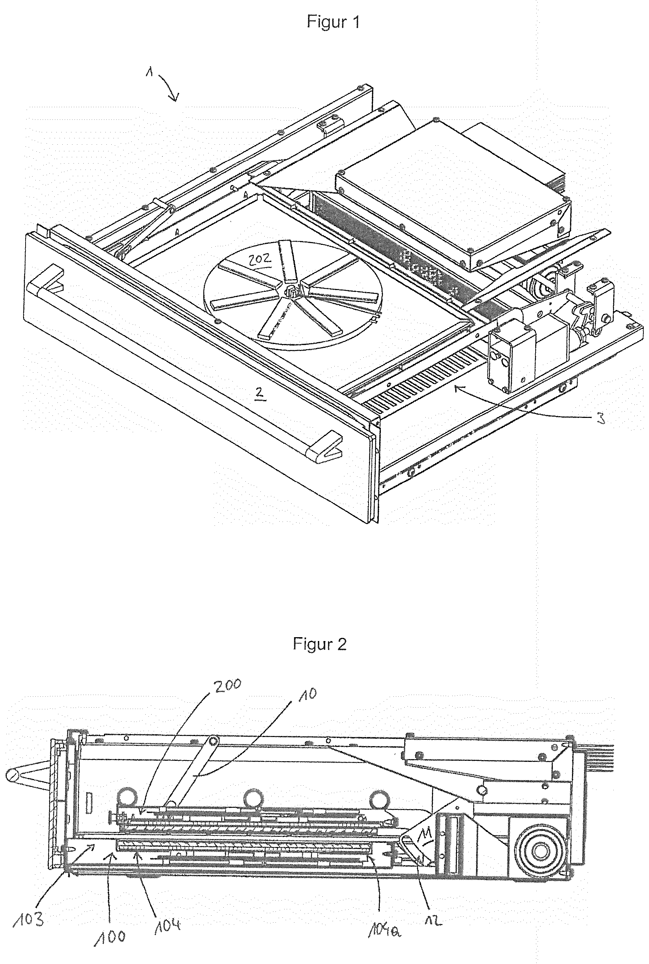

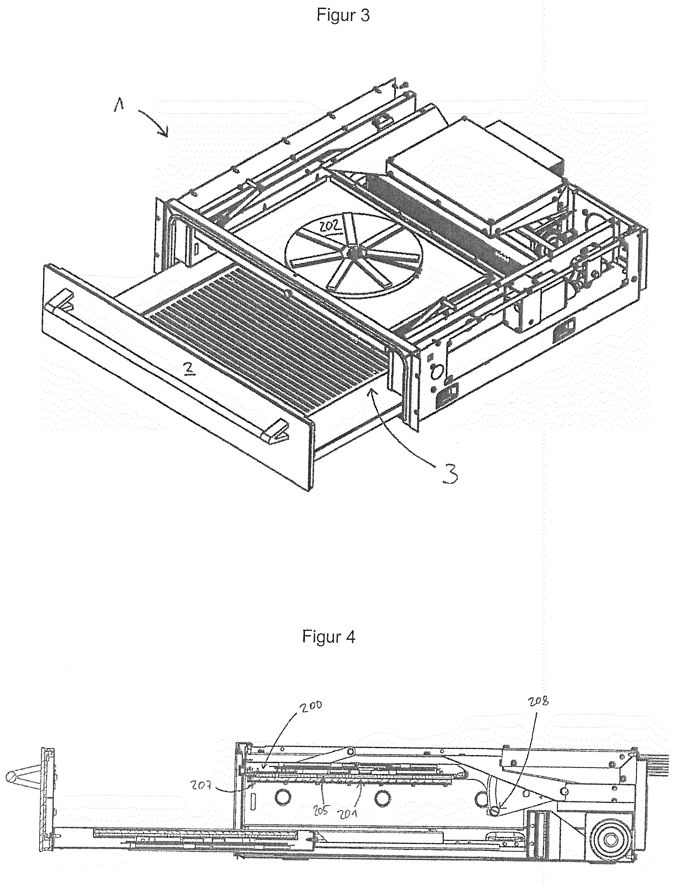

In den Figuren wird eine Aufnahme 1 einer Ausführungsform eines erfindungsgemäßen Küchenmöbels dargestellt, die eine Schublade 2 und eine erfindungsgemäße Vorrichtung 3 zum Garen von Lebensmitteln aufweist. Figuren 1 und 2 zeigen diese Aufnahme mit geschlossener Schublade und Figuren 3 und 4 zeigen diese Aufnahme mit offener Schublade.

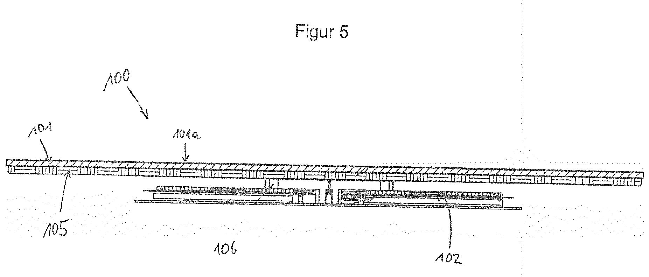

Die Schublade 2 ist in der Aufnahme 1 längsverschiebbar geführt und umfasst eine untere Heizeinheit 100 der Vorrichtung 3. Diese untere Heizeinheit 100 wird in Figur 5 in vergrößerter Ansicht gezeigt.

Sie umfasst eine Heizplatte 101, hinter der eine Induktionsspule 102 angeordnet ist. Die Heizplatte 101 weist eine Auflagefläche 101a zum Toasten von Brot bzw. zum Grillen oder dergleichen auf. Die Heizplatte 101 und die Induktionsspule 102 sind gemeinsam in dem Träger 103 angeordnet, der Teil der Schublade bildet. Der Träger 104 ist aus einem Kunststoffmaterial gefertigt. Bei der Induktionsspule 102 handelt es sich um eine stromdurchflossene Kupferdrahtspule. Die Heizplatte 101 ist lösbar an der Heizeinheit 100 befestigt, indem sie in eine Ausnehmung 104 des Trägers 103 eingelegt ist. Die Heizplatte 101 kann also zur Reinigung reversibel von der Heizeinheit 100 abgenommen werden. Zwischen der Heizplatte 101 und der Induktionsspule 102 ist eine Zwischenplatte 105 mit einer glatten und porenfreien Oberfläche angeordnet. Die Heizplatte 101 liegt vollflächig auf dieser Oberfläche auf. Zwischen der Induktionsspule 102 und der Zwischenplatte 105 sind Abstandshalter 106 angeordnet.

Die Zwischenplatte 105 ist aus Ceran®, einer Glaskeramik der Schott AG gefertigt, deren Hauptbestandteile Lithium-, Aluminium- und Siliziumoxid sind. Dieses Material hat eine hohe Durchlässigkeit für das elektrische Feld der Induktionsspule 102 und einen geringen thermischen Längenausdehnungskoeffizienten. Es weist ferner eine geringe Wärmeleitfähigkeit auf, sodass die Abwärme der aufliegenden Heizplatte 101 im Betriebszustand der Heizeinheit 100 nicht zu stark an den Kunststoffträger 103 weitergegeben wird. Die Zwischenplatte überdeckt die Induktionsspule 102 vollständig und dicht, und ist umlaufend an der Auflagefläche 104a in der Aufnahme 104 verklebt. Dies verhindert eine Verschmutzung der Induktionsspule 102 und ermöglicht eine einfache Reinigung der Schublade 2 mit abgenommener Heizplatte.

Die Heizplatte 101 ist aus einer ferromagnetischen Eisenlegierung gefertigt, die eine induktive Beheizung begünstigt. Sie weist an der Auflagefläche 101 a für das Lebensmittel eine gerillte Struktur auf, um dem Nahrungsmittel die gewünschte Roststruktur zu geben und ein Anhaften des Lebensmittels zu verringern.

In dem Gehäuse 1 ist oberhalb der unteren Heizplatte 9 eine obere Heizplatte 11 angeordnet. Die obere Heizplatte 11 umfasst eine Grillplatte 12, die an ihrer Unterseite angeordnet ist, einen Hitzeerzeuger 13, der als Heizstrahler ausgebildet ist und der an der Oberseite der oberen Heizplatte 11 angeordnet ist, und eine Abdeckung 14 für den Heizstrahler, die zwischen der Grillplatte 12 und dem Hitzeerzeuger 13 angeordnet ist. Die Grillplatte 12 ist als Platte mit quer verlaufenden Vertiefungen an ihrer Unterseite ausgestaltet. Sie ist an der oberen Heizplatte 11 lösbar befestigt und kann insbesondere zu Reinigungszwecken abgenommen und danach wieder angebracht werden.

In der Aufnahme 1 ist ferner eine obere Heizeinheit 200 vorhanden, die ähnlich der unteren Heizeinheit 100 aufgebaut ist. Im Unterschied zur unteren Heizeinheit 100 sind an der oberen Heizeinheit 200 lediglich Metallfedern 207 vorgesehen, um eine reversibel lösbare Befestigung der Heizplatte 201 zu ermöglichen, aber gleichzeitig ein schwerkraftbedingtes Ablösen von der Zwischenplatte 205 zu verhindern.

Die obere Heizeinheit 200 ist so in der Aufnahme 1 befestigt, dass die obere Heizplatte 201 sich beim Öffnen der Schublade 2 von einer ersten Stellung (gezeigt in Figur 2) in eine zweite Stellung (gezeigt in Figur 4) bewegt.

Was den Befestigungsmechanismus der oberen Heizplatte im Detail betrifft ,so ist obere Heizeinheit 200 an einen ersten Hebel 10 und an einem zweiten Hebel 11 an der Decke der Aufnahme 1 schwenkbar befestigt. Beide Hebel 10 und 11 sind zu diesem Zweck um eine Achse schwenkbar an der Decke der Aufnahme 1 befestigt. Der zweite Hebel 11 umfasst ein Langloch 12 zu Aufnahme eines Lagerzapfens 208 an der oberen Heizeinheit 200. Das Langloch 12 verläuft gekrümmt entlang einer kreisförmigen Bahn, wobei der Kreismittelpunkt durch die Schwenkachse des zweiten Hebels 11 definiert wird.

Der zweite Hebel 11 wird durch Krafteinwirkung geschwenkt, wodurch eine Bewegung der Heizeinheit 200 von der ersten Stellung in die zweite Stellung und umgekehrt bewirkt werden kann. Die Krafteinwirkung kann von einem Motor oder mechanisch durch Bewegung der Schublade erzeugt werden.

Im Betrieb befindet sich die Schublade 2 zunächst im herausgezogenen Zustand, der in Figuren 3 und 4 gezeigt ist. Dabei befindet sich die obere Heizeinheit 200 in der angehobenen zweiten Stellung. In diesem Zustand kann das Lebensmittel auf die Heizplatte 101 aufgelegt werden. Anschließend wird die Schublade 2 in die Aufnahme 1 eingeschoben.

Anschließen wird die Schublade 2 in die Aufnahme 1 eingeschoben, um den ersten Zustand zu erreichen. Dieser Zustand ist in Figuren 1 und 2 dargestellt. Während des Einschiebens der Schublade oder nach dem Einschieben der Schublade 2 wird die obere Heizeinheit 200 unter Verwendung des oben beschriebenen Mechanismus abgesenkt, bis sich die zweite Heizplatte 201 in einem geringen Abstand über der ersten Heizplatte 101 und parallel zu dieser befindet. Je nach Dicke des Lebensmittels kann entweder durch das Langloch 12 ein starres Aufdrücken verhindert werden oder die obere Heizeinheit 200 nicht zur Gänze abgesenkt werden.

## Patentansprüche

1. Vorrichtung (3) zum Garen von Lebensmitteln mit einem Gehäuse (1) sowie einer oberen und einer unteren Heizplatte (201, 101), wobei wenigstens eine Heizplatte, vorzugsweise die obere Heizplatte (201) so in dem Gehäuse (1) befestigt ist, dass sie von einer ersten Stellung in eine zweite Stellung bewegt werden kann, wobei die beiden Heizplatten (101, 201) in der ersten Stellung parallel zueinander angeordnet sind und wobei der Vertikalabstand der Heizplatten (101, 201) in der zweiten Stellung zumindest abschnittsweise größer ist als in der ersten Stellung, wobei hinter der oberen Heizplatte (201) und/oder der unteren Heizplatte (101) eine Heizung (102, 202) und vorzugsweise eine Induktionsheizung angeordnet ist, die gemeinsam mit der dazugehörigen Heizplatte (101, 201) eine obere bzw. untere Heizeinheit (100, 200) oder einen Teil davon bildet, wobei die obere und/oder untere Heizplatte (101, 201) lösbar an der jeweiligen Heizeinheit (100, 200) befestigt ist, **dadurch gekennzeichnet,**
**dass** zwischen der oberen und/oder unteren Heizplatte (201, 101) und der jeweiligen Heizung (102, 202) eine Zwischenplatte (105, 205) angeordnet ist, welche die Heizung (102, 202) vollständig und dicht überdeckt und welche aus einem hitzebeständigen und elektrisch isolierenden Material besteht, vorzugsweise aus einer Glaskeramik.

2. Vorrichtung nach Anspruch 1, **dadurch gekennzeichnet, dass** die obere und/oder die untere Heizplatte (201, 101) ein Metall und vorzugsweise ein ferromagnetisches Material wie beispielsweise eine Eisenlegierung aufweisen oder daraus bestehen.

3. Vorrichtung nach einem der vorhergehenden Ansprüche, **dadurch gekennzeichnet, dass** es sich bei dem Gehäuse (1) um die Aufnahme eines Küchenmöbels, vorzugsweise umfassend eine Schublade (2), handelt.

4. Vorrichtung nach Anspruch 3, **dadurch gekennzeichnet, dass** wenigstens eine Heizeinheit, vorzugsweise die obere Heizeinheit (200) konfiguriert ist bzw. so in der Aufnahme befestigt ist, dass die dazugehörige Heizplatte (101, 201) sich beim oder nach dem Öffnen der Schublade (2) von der ersten Stellung in die zweite Stellung bewegt.

5. Vorrichtung nach Anspruch 3 oder 4, **dadurch gekennzeichnet, dass** wenigstens eine Heizeinheit, vorzugsweise die untere Heizeinheit (100) in der Schublade (2) befestigt ist.

6. Küchenmöbel mit einer Aufnahme und einer darin angeordneten Vorrichtung (3) zum Garen von Lebensmitteln, wobei die Aufnahme des Küchenmöbels mit dem Gehäuse (1) der Vorrichtung verbunden ist oder das Gehäuse (1) darstellt,
**dadurch gekennzeichnet,**
**dass** die Vorrichtung (3) nach einem der vorgehenden Ansprüche ausgebildet ist.

## Claims

1. An apparatus (3) for cooking foods comprising a housing (1) and an upper and a lower hot plate (210, 101), wherein at least one hot plate, preferably the upper hot plate (201) is fastened in the housing such that it can be moved from a first position into a second position, wherein the two hot plates (101, 201) are arranged in parallel with one another in the first position and wherein the vertical spacing of the hot plates (101, 201) is at least sectionally larger in the second position than in the first position, wherein a heating (102, 202), and preferably an induction heating, is provided behind the upper hot plate (201) and/or the lower hot plate (101) and forms, together with the associated hot plate (101, 201), an upper and/or lower heating unit (100, 200) or a part thereof; and wherein the upper and/or lower hot plate (101, 201) is releasably fastened to the respective heating unit (100, 200),
**characterized in that**
an intermediate plate (105, 205) that covers the heating (101, 202) completely and in a sealed manner and that comprises a heat-resistant and electrically insulating material, preferably a glass ceramic material, is arranged between the upper and/or lower hot plate (201, 102) and the respective heating (102, 202).

2. An apparatus in accordance with claim 1, **characterized in that** the upper and/or the lower hot plate (201, 101) comprises or consists of a metal and preferably a ferromagnetic material such as an iron alloy.

3. An apparatus in accordance with one of the preceding claims, **characterized in that** the housing (1) is the receiver of a piece of kitchen furniture, preferably comprising a drawer (2).

4. An apparatus in accordance with claim 3, **characterized in that** at least one heating unit, preferably the upper heating unit (200), is configured or is fastened in the receiver such that the associated hot plate (101, 201) moves from the first position into the second position on or after the opening of the drawer (2).

5. An apparatus in accordance with claim 3 or claim 4, **characterized in that** at least one heating unit, preferably the lower heating unit (100), is fastened in the drawer (2).

6. A piece of kitchen furniture comprising a receiver and an apparatus (3) arranged therein for cooking foods, wherein the receiver of the piece of kitchen furniture is connected to the housing (1) of the apparatus or represents the housing (1),
**characterized in that**
the apparatus (3) is configured in accordance with one of the preceding claims.

## Revendications

1. Dispositif (3) de cuisson de produits alimentaires comprenant un boîtier (1) ainsi qu'une plaque chauffante supérieure et une plaque chauffante inférieure (201, 101), au moins une plaque chauffante, de préférence la plaque chauffante supérieure (201) étant fixée de telle manière dans le boîtier (1) qu'elle peut être déplacée d'une première position à une seconde position,
les deux plaques chauffantes (101, 201) étant disposées parallèlement l'une à l'autre dans la première position et l'écart vertical entre les plaques chauffantes (101, 201) dans la seconde position étant au moins en partie supérieur à celui de la première position, un élément de chauffage (102, 202), et de préférence un élément de chauffage par induction, étant disposé derrière la plaque chauffante supérieure (201) et/ou la plaque chauffante inférieure (101) et formant conjointement avec la plaque chauffante (101, 201) associée une unité de chauffage supérieure ou inférieure (100, 200) ou une partie de celle-ci,
la plaque chauffante supérieure et/ou inférieure (101, 201) étant fixée de manière détachable à l'unité de chauffage (100, 200) respective,
**caractérisé en ce que**,
entre la plaque chauffante supérieure et/ou inférieure (201, 101) et l'élément de chauffage (102, 202) respectif, est disposée une plaque intermédiaire (105, 205), qui recouvre entièrement et de manière étanchéifiante l'élément de chauffage (102, 202) et qui est composée d'un matériau résistant à la chaleur et isolant électriquement, de préférence de vitrocéramique.

2. Dispositif selon la revendication 1, **caractérisé en ce que** la plaque chauffante supérieure et/ou la plaque chauffante inférieure (201, 101) comportent ou sont constituées d'un métal, et de préférence d'un matériau ferromagnétique, comme par exemple un alliage de fer.

3. Dispositif selon l'une des revendications précédentes, **caractérisé en ce que** le boîtier (1) est le logement d'un meuble de cuisine, comprenant de préférence un tiroir (2).

4. Dispositif selon la revendication 3, **caractérisé en ce qu'**au moins une unité de chauffage, de préférence l'unité de chauffage supérieure (200) est configurée ou est fixée de telle manière dans le logement que la plaque chauffante (101, 201) associée à celle-ci se déplace de la première position à la seconde position lors de l'ouverture du tiroir (2) ou après celle-ci.

5. Dispositif selon la revendication 3 ou 4, **caractérisé en ce qu'**au moins une unité de chauffage, de préférence l'unité de chauffage inférieure (100) est fixée dans le tiroir (2).

6. Meuble de cuisine comprenant un logement et un dispositif (3) de cuisson de produits alimentaires disposé dans ledit logement, dans lequel
le logement du meuble de cuisine est relié au boîtier (1) du dispositif ou représente le boîtier (1),
**caractérisé en ce que** le dispositif (3) est réalisé selon l'une des revendications précédentes.
